# EUROPEAN PATENT SPECIFICATION

(11) **EP 0 737 086 B1**
(45) Date of publication and mention of the grant of the patent: **29.07.1998**
(21) Application number: 95905988.2
(22) Date of filing: 16.12.1994
(51) Int. Cl.: A62D 3/00, B09B 3/00

(54) **COMPOSITION AND PROCESS FOR REDUCING OR PREVENTING METAL AND ACID CONTAMINATION IN ROCK DRAINAGE**
MITTEL UND VERFAHREN ZUR VERMINDERUNG ODER VERMEIDUNG VON METALL- UND SÄUREVERUNREINIGUNG IN STEINENTWÄSSERUNG
PROCEDE ET COMPOSITION PERMETTANT DE REDUIRE OU DE PREVENIR LA CONTAMINATION PAR DES METAUX ET DES ACIDES DANS DES EXHAURES DE ROCHES ACIDES

(30) Priority: 29.12.1993 US 176483
(43) Date of publication of application: 16.10.1996
(73) Proprietor: BUCKMAN LABORATORIES INTERNATIONAL, INC., Memphis Tennessee 38108 (US)
(72) Inventor: KRAVETZ, Mark E., Corte Madera, CA 94925 (US); McNEEL, Thomas, E., Memphis, TN 38135 (US)
(74) Representative: Matthews, Derek Peter
(86) International application number: US9414565
(87) International publication number: WO9517927

(56) References cited:
- EP-A- 0 283 600
- EP-A- 0 535 758
- DE-A- 4 112 933
- US-A- 4 314 966

## Description

The present invention relates to a composition and process for reducing or preventing the formation of contaminants in rock drainage and more particularly, to a composition and process for treating waste rock and tailings to reduce or prevent the formation of metal and acid contamination in rock drainage.

Many excavation sites and all mining waste units, including open pits, underground tunnels, waste rock dumps, tailings impoundments, heap leach cells and mining overburden, referred to herein collectively as waste rock and tailings, have the potential to become acidic, depending upon the inherent potential of the material and the short and long term disposal techniques employed. When left exposed to air and water, the waste rock and tailings which generally contain iron and other metals, create an environment that is suitable for the growth of acid forming bacteria such as, e.g., T. ferrooxidans. After time, the acid from the acid forming bacteria enables the metals that are contained in the tailings or waste rock to leach into the surrounding environment, e.g., rivers, streams and lakes, for example, as a metal-containing acid runoff. As used herein, tailings are the spent, crushed rock and waste that remains after harvestable metals, ores and minerals, for example have been removed.

In certain cases, the tailings containing pyrite, marcasite and pyrrhotite readily oxidize, the rate of oxidation depending on the sulfide content, morphology, bacterial activity, ferric ion concentration, water and oxygen availability. The product resulting from these and similar activities include acids, metals, metal oxides and metal salts, for example that become available to contaminate both local surface and ground waters. This damaging runoff is referred to as acid rock drainage, also known as acid mine drainage. The problem is monumental in view of the magnitude of the sites from which the drainage originates, many of the waste rock dumps, tailings impoundments, for example being of mountainous proportions.

Thus, one of the major problems facing the mining and mineral processing industry is the disposal and management of waste rock and tailings, for example. The effects of acid rock drainage are extremely serious due to the release of toxic heavy metal and acid leachate and effluent to surface and subsurface waters in nature and the environment.

Historically, waste rock and tailings materials were disposed of with little or no regard or understanding of the processes leading to the generation of acid waters. More recently, there have been a wide variety and great number of methods proposed to control, remediate and treat acid rock drainage, including attempts to remove the sulfides, control the bacterial activity, control oxygen diffusion, coat the sulfide particles, precipitate or neutralize the contaminants and/or adsorb the contaminants. All, however, incorporate either the exclusion of oxygen and water, or neutralization, which in turn relates to the specific growth conditions required by the bacteria, T. ferrooxidans.

The use of neutralizing or fixative additives have had success in that they are readily available, work fairly well, and can be applied economically. Neutralizing and fixating agents and processes are wellknown in the art. The drawback in their application is the enormous volume of material required to successfully neutralize or fixate the waste rock material. In one fixating process that successfully reduces the amount of acid that is formed in a waste rock or tailings pile, a binder such as Portland Cement is added to the waste rock or tailings in an agglomeration ball mill and the mixture is formed into a spherical, hardened pellet. The resulting pellet is strong and does not allow the leaching of the metals.

In view of the foregoing, it can be seen that it would be advantageous to provide compositions and processes which inhibit, reduce or prevent acid rock drainage.

### SUMMARY OF THE INVENTION

Accordingly, the present invention is directed to a composition and process which substantially overcomes one or more of the problems due to limitations and disadvantages of the prior art.

The principal advantage of the present invention is realized by an improved composition and process which inhibits, reduces or prevents the effects of acid rock drainage which originates from waste rock and tailings.

Additional features and advantages of the invention will be set forth in the description which follows, and in part will be apparent from the description, or may be learned by practice of the invention. The objectives and other advantages of the invention will be realized and attained by the composition and process particularly pointed out in the written description and claims hereof.

To achieve these and other advantages and in accordance with the purpose of the invention, as embodied and broadly described, the invention is directed to a composition for reducing or preventing the formation of contaminants in drainage from waste rock or tailings by combining an organic or inorganic sulfur compound with a neutralizing agent, a fixating agent or a mixture of a neutralizing agent and a fixating agent. Accordingly, in one aspect of the present invention, there is provided a waste rock treatment composition having an organic or inorganic sulfur compound in combination with one of the following: a neutralizing agent, a fixating agent or a combination of a neutralizing agent and a fixating agent.

In another aspect of the invention, there is provided a process for reducing or preventing the formation of contaminants in drainage from waste rock or tailings by contacting the waste rock or tailings with an organic or inorganic sulfur compound in combination with a neutralizing agent, a fixating agent or a neutralizing agent and a fixating agent.

In still another aspect of the present invention, there is provided a process for reducing or preventing the formation of contaminants in drainage from waste rock or tailings by providing an organic or inorganic sulfur compound and a neutralizing agent, a fixating agent or a mixture of neutralizing agent and fixating agent, and applying the organic or inorganic sulfur compound and the neutralizing agent, fixating agent or a mixture of neutralizing agent and fixating agent to waste rock or tailings, the organic or inorganic sulfur compound in combination with the neutralizing agent, fixating agent or mixture of neutralizing agent and fixating agent being applied to the waste rock or tailings in an amount effective to reduce or prevent formation of metal contamination and acid in rock drainage originating from the waste rock or tailings.

It has been found that the combination of an organic or inorganic sulfur compound and a neutralizing agent, a fixating agent or a mixture of neutralizing agent and fixating agent has a synergistic effect in reducing, inhibiting or preventing the formation of contaminants in drainage, i.e., water runoff, originating from waste rock or tailings. With the above combinations, superior inhibition, reduction or prevention of acid rock or tailings drainage is achieved with the combined ingredients of the present invention over that achieved when each of the ingredients is used alone. Furthermore, substantially reduced amounts of fixating agent and/or neutralizing agent are required to reduce, inhibit or prevent the formation of contaminants in waste rock or tailings drainage when organic and inorganic sulfur compound is used in combination with the fixating agent and/or neutralizing agent.

The contaminants which are reduced (in concentration or amount), inhibited or prevented in drainage from waste rock or tailings by the composition and process of the present invention are well-known in the art and can include, but are not limited to, toxic heavy metals and their oxides, and sulfur, sulfites and sulfates which form sulfuric acid. As used herein, the toxic metals are metals having an atomic number greater than that of sodium (atomic no. 11), e.g., copper, zinc, gold, manganese, aluminum, silver, cadmium, nickel, for example, but excluding the alkali metals and alkaline earth metals.

As used herein, when the contamination is acid and there is a reduction in acidity of the drainage, the pH of drainage from waste rock or tailings is changed from a higher acidity to a lower acidity, i.e., toward a pH above 7.0 and frequently to a pH of 8-14. Ideally, the pH of the drainage from waste rock or tailings is or would be about 7.0, i.e., neutral. However, in reality, if the pH can be maintained at or above a pH of 6.0, it is considered reduced in accordance with the present invention. For example, if the pH can be maintained at 6.0 to 12.0 and preferably at 7 to 10, the acidity is considered to have been inhibited or acid contamination is considered to have been prevented in the drainage, thereby preventing substantial acid runoff from the waste rock or tailings. When the metal contamination, e.g., toxic heavy metals, including the oxides thereof, can be reduced by 25% or more, it is considered as a reduction in contamination by metals. Generally, it has been found that in certain instances, there can be a 50% or more and preferably a 90% or more reduction in the toxic heavy metals leached from waste rock or tailings when the process and compositions of the present invention are utilized. Naturally, the effect of the various combinations of sulfur compound and fixating agent and/or neutralizing agent varies according to the particular waste rock or tailings to be treated.

### DETAILED DESCRIPTION OF THE INVENTION

The sulfur compounds which are used in the composition and process of the present invention can be organic sulfur compounds, inorganic sulfur compounds or mixtures of organic and inorganic sulfur compounds. Generally, the sulfur compounds which are used in the present invention are commercially available or they can be easily synthesized from commercially available raw materials. The sulfur compounds which may be used in the present invention can be water soluble or water insoluble and generally react or interact with metals in waste rock or tailings to form stable metal sulfides or sulfide-like complexes which are insoluble in water and which cannot be leached from the waste rock or tailings. The metals in waste rock and tailings vary depending upon the source of their origin and include, but are not limited to, the metals and their oxides discussed above. Thus, the stable metal sulfides which are insoluble in water and which can be formed in accordance with the present invention include the sulfides of such toxic heavy metals as copper, zinc, gold, manganese, silver, cadmium and nickel for example.

Any sulfur compound which inhibits, reduces or prevents the formation of contaminants in drainage from waste rock or tailings when combined with the neutralizing agents and/or fixating agents of the present invention, may be used in the compositions and process of the present invention. In general, the organic and inorganic sulfur compounds of the present invention include any sulfur compound which has a sulfhydryl (-SH) group or an ionized sulfhydryl group (-S(-1)). Compounds containing a sulfhydryl or an ionized sulfhydryl group include hydrogen sulfide and inorganic compounds containing sulfide ion, hydrosulfide ion or trithiocarbonate ion as well as organic compounds such as dithiocarbamates, xanthates, mercaptans and the soluble metal salts of these compounds, i.e., the alkaki metal and alkaline earth metal salts. Furthermore, sulfur compounds which are capable of producing a sulfhydryl or an ionized sulfhydryl group may be used in the composition and process of the present invention, and include such sulfur compounds as thioacetamide and reducible disulfides. Sulfur-containing amino acids (such as cysteine, cystine and glutathione) and peptides (synthetic as well as naturally-occurring) or proteins that include sulfur-containing amino acids are also sulfur compounds which have sulfhydryl or ionized sulfhydryl groups and may be used as sulfur compounds in accordance with the present invention.

Examples of organic sulfur compounds which may be used in the present invention, include sodium, potassium or calcium salts of the following ions: ethyl xanthate ion, glucose xanthate ion, isopropyl xanthate ion, dimethyldithiocarbamate ion or diethyldithiocarbamate ion. Examples of inorganic sulfur compounds which may be used in the present invention, include sodium trithiocarbonate, potassium trithiocarbonate, calcium trithiocarbonate, sodium sulfide, potassium sulfide or calcium sulfide, i.e., sulfur compounds of metals which generally have relatively low toxicity in water as wellknown in the art. As used herein, toxic heavy metals and their oxides are generally defined as metals and metal oxides wherein the metal is heavier than sodium as discussed above and which are known to attribute to the toxicity of water. Other organic or inorganic sulfur compounds may be chosen by one skilled in the art without undue experimentation.

The neutralizing agents which can be used in the composition and process of the present invention can be in any physical form, e.g., solid or liquid. As used herein, a neutralizing agent is one which neutralizes acid and has a pH above 7.0. In accordance with the present invention, it is possible to use one or more neutralizing agents in the composition or process, e.g., a mixture of limestone and magnesium hydroxide, hydrated lime and sodium hydroxide, for example. A sufficient amount of neutralizing agent is preferably used so that any drainage resulting from the waste rock or tailings will have a high pH, that is a pH of 6 to 12 and preferably a pH from 7 to 10. The neutralizing agent also preferably maintains a pH above that at which bacterial action occurs, for example, a pH at which the growth of the bacteria, T. Ferrooxidans is inhibited or prevented.

Conventional neutralizing agents are well known in the art and may be used in the process and composition of the present invention. Any alkaline material, such as metal oxides or hydroxides, may be used in the present invention. Generally, the neutralizing agents are carbonate compounds, oxides or hydroxide compounds, e.g., metal carbonates, metal oxides or metal hydroxides, the preferred metals generally being alkali or alkaline earth metals. Preferred neutralizing agents include limestone, calcium carbonate, quick lime, hydrated lime, magnesium oxide, magnesium hydroxide, sodium hydroxide, calcium hydroxide, potassium hydroxide or lime kiln dust, for example. Ammonia, organic amines, quaternary ammonium hydroxides and quaternary ammonium carbonates may also be used as neutralizing agents in the composition and process of the present invention. The neutralizing agents of the present invention are not sulfur compounds.

Fixating agents are also conventional materials and are well known in the art. The fixating agent which may be used in the process and composition of the present invention may be of any physical form that aids in the physical isolation of the waste rock or tailings from oxygen and water, i.e., the agent fixates the waste rock or tailings so that air (oxygen) and water are substantially excluded from the waste rock or tailings. The fixating agents also fix the metals which have reacted with the sulfur compounds of the present composition and process. As well-known in the art, fixating agents are used to form bricks or pellets or other solid configurations of waste rock or tailings so that the materials which normally form contaminants in drainage are sealed within the brick or pellet.

A wide variety of materials may be used as fixating agents, and preferably, the fixating agent is selected based on its local availability and site conditions. In accordance with the present invention, it is possible to use one or more fixating agents in the composition or process, e.g., a mixture of clay and concrete, concrete and incinerator flue dust, for example. As explained above, any of the fixating agents which are well-known in the art may be used in the composition and process of the present invention and include soils, clay, a mixture of clay and soil, phosphatic clays, concrete, calcium aluminosilicate, asphalt, incinerator flue dust (fly ash), cement kiln dust and calcium sulfate (gypsum/Plaster of Paris), for example. Analogous materials based on other alkaline earth metal salts, e.g., magnesium aluminosilicate, strontium aluminosilicate, barium aluminosilicate, strontium sulfate and barium sulfate, may also be used as fixating agents in the present invention.

It is also possible to utilize synthetic membranes in connection with the process of the present invention to isolate the waste rock or tailings materials which are treated with the composition or by the process of the present invention. For example, the waste rock or tailings which have been treated with the compositions or by the process of the present invention, may be isolated in holding areas by the use of plastic sheet material as well-known in the art.

The amount of organic and/or inorganic sulfur compound combined with the neutralizing agent, and/or fixating agent in the composition and process of the present invention is an amount of sulfur compound and neutralizing agent and/or fixating agent in the composition effective to reduce or prevent formation of contamination in rock drainage, e.g., metal and metal oxide (especially toxic heavy metal) contamination and/or acid contamination in rock drainage. In certain aspects of the present invention when the components of the composition are applied separately, i.e., when the organic and/or inorganic sulfur compound and neutralizing agent and/or fixating agent become combined only after they are applied to the waste rock or tailings, the organic and/or inorganic sulfur compounds are applied in an amount of 10% to 60% by weight based on the total weight of all of the components applied to the waste rock or tailings and in a more preferred embodiment, the organic and/or inorganic sulfur compounds are applied in an amount of 40% to 55% by weight based on the total weight of all of the components applied to the waste rock or tailings. Thus, in certain aspects of the present invention, the organic and/or inorganic sulfur compounds would be applied in an amount of 10% to 60% by weight and the neutralizing agent and/or fixating agent would be applied in an amount of 90% to 40% by weight, based on the total weight of all of the components applied to the waste rock or tailings.

In certain other aspects of the present invention, when the components of the composition are applied as a pre-mixed form, i.e., when the organic and/or inorganic sulfur compound and neutralizing agent and/or fixating agent are combined by mixing before they are applied to the waste rock or tailings, the organic and/or inorganic sulfur compounds are present in the pre-mixed composition at 10% to 60% by weight of the composition and in a more preferred embodiment, the organic and/or inorganic sulfur compound is present in an amount of 40% to 55% by weight of the pre-mixed composition. Thus, in certain aspects of the present invention, the pre-mixed composition would contain 10% to 60% by weight of organic and/or inorganic sulfur compound and 90% to 40% by weight of neutralizing agent and/or fixating agent.

In the present invention, when the organic and/or inorganic sulfur compound is used in conjunction with waste rock or tailings, the amount of organic and/or inorganic sulfur compound in combination with the amount of neutralizing agent and/or fixating agent is an amount sufficient to reduce, inhibit or prevent the formation of contaminants in drainage from waste rock or tailings. As indicated above, the amount of sulfur compound to neutralizing agent and/or fixating agent varies depending on the type of waste rock or tailings material to which the agents are applied. Generally, in accordance with the process of the present invention, the amount of sulfur compound, i.e., inorganic and/or organic compound, is 0.5% by weight to 20% by weight and the amount of neutralizing agent and/or fixating agent is 1% by weight to 50% by weight, and more preferably 1% by weight to 15% by weight, based on the weight of the waste rock or tailings. In certain other aspects of the present invention, the amount of sulfur compound is 1% by weight to 5% by weight and the amount of neutralizing agent and/or fixating agent is 1% by weight to 30% by weight, and more preferably 1% by weight to 8% by weight, based on the weight of the waste rock or tailings. As indicated above, when these amounts of sulfur compounds and neutralizing agents and/or fixating agents are used in the compositions of the present invention, there is a synergistic effect in the reduction, inhibition or prevention of the formation of contaminants in drainage from waste rock or tailings. For example, it has been found that when certain sulfur compounds are used in conjunction with the fixating agent and/or neutralizing agent in the process of the present invention, the amount of fixating agent or neutralizing agent which is conventionally used to control contamination in drainage from waste rock or tailings is reduced from 15% by weight to 5% by weight based on the weight of the waste rock or tailings.

In another aspect of the present invention, the synergistic effect of the combination of sulfur compound and fixating agent resulted in a substantial reduction of the amount of cement, i.e., fixating agent, from about 15% by weight down to 5% by weight by using only 1% of BUFLOC 528, tradename used by Buckman Laboratories, International, Inc., for a 40% solution of sodium dimethyldithiocarbamate. Although greater amounts of sulfur compounds and fixating agents and/or neutralizing agents than discussed above may be used in the process and composition of the present invention, for example, amounts greater than 20% by weight of sulfur compound and greater than 50% by weight (or an excess) of fixating agent and/or neutralizing agent, there is no advantage in using such excess as such excess merely contributes to the costs (both in physical/operational and economic terms) of reducing contaminants in drainage from waste rock or tailings.

A mixture of sulfur compounds, including a mixture of inorganic and/or organic sulfur compounds may be used in the composition and process of the present invention. For example, one or more xanthates may be used and may be combined with, e.g., sodium sulfide. Combinations of fixating agents and combinations of neutralizing agents can also be used in the composition and process of the present invention. Furthermore, one or more sulfur compounds may be used in conjunction with one or more fixating agents and one or more neutralizing agents in accordance with the process of the present invention. For example, in one preferred embodiment of the present invention, sodium glucose xanthate, lime and cement are applied to waste rock to reduce the formation of contaminants in drainage which occurs when water contacts the waste rock. In other preferred embodiments of the present invention, sodium glucose xanthate and lime, potassium glucose xanthate and lime, sodium glucose xanthate and Portland cement, potassium glucose xanthate and Portland cement, sodium glucose xanthate and lime kiln dust, potassium glucose xanthate and lime kiln dust, sodium glucose xanthate and cement kiln dust or potassium glucose xanthate and cement kiln dust are applied to waste rock or tailings to reduce contaminants in drainage from waste rock or tailings.

In accordance with the present invention, the sulfur compound and the neutralizing agent and/or fixating agent may be applied in any convenient manner and in any convenient physical form, i.e., liquid and/or solid. For example, the sulfur compound, neutralizing agent and/or fixating agent may be pre-mixed prior to the application to waste rock or tailings. In certain other aspects of the present invention, the sulfur compound and the neutralizing agent and/or fixating agent may be applied separately, i.e., in separate applications, e.g., in layers, to the waste rock or tailings. Furthermore, the sulfur compound may be applied as a liquid or a solid and the fixating agent and/or neutralizing agent may be applied in a liquid form or in a solid form or any combination thereof.

The sulfur compound, the neutralizing agent and/or fixating agent may be applied as a homogeneous pre-mixture or as separate components in layers on the waste rock or tailings or they may be mixed as a homogeneous pre-mixture or as separate components with the waste rock or tailings or any combination thereof. A plurality of layers may also be applied to or contact the waste rock or tailings in accordance with the present invention as long as there is a combination of sulfur compound and fixating agent, sulfur compound and neutralizing agent or sulfur compound, fixating agent and neutralizing agent.

When the sulfur compound and neutralizing agent and/or fixating agent are not pre-mixed, the sulfur compound and fixating agent and/or neutralizing agent may be applied to or mixed with the waste rock or tailings in any order or combination of layers so long as the combination ensures that all of the following criteria are met:
1. The fixating agent is or will become intimately mixed with precipitated metals, i.e., the metal-sulfur compounds, any metal hydroxides, e.g., aluminum hydroxide, and metal carbonates which precipitate as a result of the reaction between the sulfur compound or the neutralizing agent and the metals in the waste rock or tailings.
2. The sulfur compound will come in contact with dissolved metal before it can leave the containment area. If the sulfur compound is not (or will not become) intimately mixed with the waste rock, then the leachate (drainage) from the waste rock must pass through an area containing the sulfur compound before it leaves the containment area. For example, the leachate (drainage) could be captured and treated in an external tank (which, in this application, would be the "area" in which the sulfur compound comes in contact with the dissolved metals).
3. The neutralizing agent will come in contact with the leachate water (drainage) at some time before it leaves the containment area so that the pH of the water leaving the system will be above 6.0, preferably above 7.0.

For example, a layer or layers of sulfur compound may be applied on the waste rock or tailings followed by a layer of fixating agent or a layer of neutralizing agent. Alternatively, a layer of neutralizing agent may be applied on the waste rock followed by a layer of fixating agent or sulfur compound and the like. Any number of layers can be deposited in any order as desired as long as a combination of sulfur compound and fixating agent and/or neutralizing agent is maintained and as long as the layer or layers do not form a water impervious barrier and prevent water from flowing through the layer or layers to the waste rock or tailings.

It is within the purview of one skilled in the art to use adjuvants and additives which are conventionally used in the treatment of acid rock drainage and mine waste water, with the composition and in the process of the present invention.

In order to test various organic or inorganic sulfur compounds in combination with fixating agents and/or neutralizing agents to determine the optimum amounts of a particular combination of sulfur compound and fixating agent and/or neutralizing agent which may be used in reducing, preventing or inhibiting contamination in drainage water from waste rock or tailings, all that is necessary is to place the waste rock or tailings material to be treated in a column, e.g., a plastic or glass column having a length of about three feet and an inside diameter of about three inches, and apply the particular combination of sulfur compound and fixating agent and/or neutralizing agent in specific amounts to the waste rock material or tailings material, pass water therethrough and test the leachate for various toxic heavy metals and for acidity. The sulfur compound and neutralizing agent and/or fixating agent can be layered on the waste rock or tailings material or it can be mixed with the waste rock or tailings material as desired and various amounts of the materials may be utilized to determine the optimum amounts for achieving reduced contamination or for eliminating contamination. Although there is no requisite length of time required for the testing to continue, it is generally recommended that a test run from 90 days to 180 days to determine the effectiveness of the particular combination of compounds used in varying amounts. Such tests are generally referred to as humidity cell/column tests and they are well-known in the art. Standard tests for metals and acidity are also well-known in the art.

The following specific examples describe the composition and process of this invention according to certain embodiments. They are intended for illustrative purposes only and should not be construed as limiting the present invention.

Unless otherwise specified in the examples and throughout the specification, all parts and percentages are by weight.

### EXAMPLES

In the following examples, various combinations of agents were used on waste rock originating from an abandoned gold mine to determine the effectiveness of the particular agent or combination of agents. The effectiveness of the agent was determined by an analysis of the leachate, in particular, an analysis using conventional tests well-known in the art for potentially toxic heavy metals frequently found in acid rock drainage.

A humidity cell/column test was used to obtain the leachate from the waste rock. The cylinder was filled with the waste rock combined with various agents and/or having various layers of agents as set forth below. Water was passed through the filled cylinder. Tests were conducted on the leachate for the metals shown in the table below by conventional tests well-known in the art. The pH and the amount of sulfate (SO₄) in the leachate were also determined.

### EXAMPLE 1:

The waste rock was placed in a column (as described above) in two layers, a base layer which contained a total of 2.5% (by weight) of the waste rock and a top layer which contained the remainder of the waste rock, i.e., 97.5% (by weight). The base layer which contained 2.5% by weight of the waste rock was homogeneously mixed with 2.5% by weight of cement kiln dust (CKD) and 0.15% by weight of sodium dimethyldithiocarbamate sold as BUFLOC 528 by Buckman Laboratories International, Inc., based on the weight of the waste rock in the layer. A top layer of waste rock (97.5% of the weight of waste rock) was placed on the homogeneously mixed base layer. The top layer was homogeneously mixed with 2.5% by weight, of cement kiln dust (CKD), 0.15% by weight of lime kiln dust (LKD) and 0.85% by weight of sodium dimethyldithiocarbamate, (BUFLOC 528) based on the weight of the waste rock in the layer. The column configuration may be summarized as:
Base layer: 2.5% Waste Rock + 2.5% CKD + 0.15% BUFLOC 528 (Homogeneously mixed)
Top layer: 97.5% Waste Rock + 2.5% CKD + 0.15% LKD + 0.85% BUFLOC 528 (Homogeneously mixed)
Water was passed through the column to obtain a leachate and the leachate analysis is shown in the table below.

### EXAMPLE 2

A column (as described above) was filled with a homogeneous mixture of waste rock, 1.0% by weight, based on the weight of the waste rock of lime in a 15% slurry with water and 0.5% by weight, based on the weight of the waste rock of sodium dimethyldithiocarbamate (BUFLOC 528). The column configuration may be summarized as:
Waste Rock + 1.0% Lime (15% slurry) + 0.5% BUFLOC 528 (Homogeneously mixed)
Water was passed through the column to obtain a leachate and the leachate analysis is shown in the table below.

### EXAMPLE 3 (Comparative)

Waste rock and 15% by weight, based on the weight of the waste rock, of lime kiln dust (LKD) were homogeneously mixed. A column as described above was filled with the mixture and water was passed through the column to obtain a leachate. The column configuration may be summarized as:
Waste Rock + 15% LKD (homogeneously mixed)

The leachate analysis is shown in the table below.

### EXAMPLE 4 (Comparative)

The waste rock was placed in a column in two layers as described in Example 1. The base layer contained a total of 7.5% (by weight) of the waste rock and the top layer contained the remainder of the waste rock, i.e., 92.5% (by weight). The base layer contained 7.5% by weight, based on the weight of the waste rock, of lime kiln dust (LKD) homogeneously mixed with the waste rock. The top layer contained 7.5% by weight, based on the weight of the waste rock, of lime kiln dust (LKD) homogeneously mixed with the waste rock. The column configuration may be summarized as follows:
Base layer: 7.5% Waste Rock + 7.5% LKD (homogeneously mixed)
Top layer: 92.5% Waste Rock + 7.5% LKD (homogeneously mixed)

Water was passed through the column to obtain a leachate and the leachate analysis is shown in the table below.

**TABLE**

| ANALYSIS OF LEACHATE FROM EXAMPLES 1-4 | | | | | | | | | | | |
|---|---|---|---|---|---|---|---|---|---|---|---|
| Example No. | pH | Cu | Zn | Au | Mn | Fe | Al | SO₄ | Ag | Cd | Ni |
| 1 | 11.80 | 0.034 | 0.326 | 0.036 | 0.019 | 0.268 | NR | 599 | ND | 0.002 | 0.033 |
| 2 | 8.99 | 0.018 | 0.084 | 0.033 | 0.121 | 0.286 | NR | 1263.5 | ND | 0.004 | 0.065 |
| 3 | 12.67 | 0.178 | 0.032 | 0.036 | 0.011 | 0.239 | NR | 0.04 | 0.005 | 1.53 | ND |
| 4 | 12.67 | 0.169 | 0.006 | 0.028 | 0.012 | 0.271 | NR | 0.0 | 0.017 | 0.002 | ND |

The metals and sulfate (SO₄) are shown in the Table in parts per million (ppm).

Examples 3 and 4 are Comparative Examples and do not utilize the combined sulfur compound and fixating agent and/or neutralizing agent of the present invention. Examples 1 and 2 demonstrate that substantially equal results are obtained when the sulfur-containing compound, i.e., sodium dimethyldithiocarbamate, is used in combination with a lower dose of lime kiln dust and cement kiln dust and when large doses of lime kiln dust and cement kiln dust are used alone, i.e., without the sulfur-compound of the present invention as in Examples 3 and 4. Equal or better results are obtained when a combination of a very low dose of lime and a sulfur compound, sodium dimethyldithiocarbamate, are used with the waste rock as set forth in Example 2 which also shows a high pH (non-acidic).

It would be apparent to those skilled in the art that various modifications can be made in the composition and process of the present invention without departing from the scope of the invention, as set out in the appended claims.

## Claims

1. A composition for reducing or preventing the formation of contaminants in drainage from waste rock or tailings consisting essentially of an organic or inorganic sulfur compound in combination with a neutralizing agent, a fixating agent or a mixture of neutralizing agent and fixating agent, the sulfur compound and fixating agent, neutralizing agent or mixture of neutralizing agent and fixating agent being present in the composition in an amount effective to reduce or prevent formation of metal and acid contamination in drainage from said solid waste rock or tailings with the proviso that toxic heavy metal-containing sulfur compounds and their oxides are excluded as the organic or inorganic sulfur compound.

2. The composition as claimed in claim 1, wherein the organic or inorganic sulfur compound is a sulfur compound having a sulfhydryl group or an ionised sulfhydryl group or a sulfur compound which is capable of producing a sulfhydryl group or an ionized sulfhydryl group.

3. The composition as claimed in either one of claims 1 and 2, wherein the organic or inorganic sulfur compound is 10% to 60% by weight of the composition.

4. The composition as claimed in claim 3, wherein the organic or inorganic sulfur compound is 40% to 55% by weight of the composition.

5. The composition as claimed in any one of claims 1 to 4, wherein the organic sulfur compound is sodium ethyl xanthate, potassium ethyl xanthate, calcium ethyl xanthate, sodium glucose xanthate, potassium glucose xanthate, calcium glucose xanthate, sodium isopropyl xanthate, calcium isopropyl xanthate, potassium isopropyl xanthate, calcium dimethyldithiocarbamate, sodium dimethyldithiocarbamate, potassium dimethyldithiocarbamate, sodium diethyldithiocarbamate, calcium diethyldithiocarbamate, potassium diethyldithiocarbamate, cysteine, cystine or glutathione.

6. The composition as claimed in claim 5, wherein the organic sulfur compound is sodium dimethyldithiocarbamate or sodium glucose xanthate.

7. The composition as claimed in any one of claims 1 to 4, wherein the inorganic sulfur compound is sodium trithiocarbonate, potassium trithiocarbonate, calcium trithiocarbonate, sodium sulfide, potassium sulfide or calcium sulfide.

8. The composition as claimed in any one of claims 1 to 7, wherein the neutralizing agent is limestone, quick lime, hydrated lime, magnesium oxide, magnesium hydroxide, sodium hydroxide, potassium hydroxide or lime kiln dust.

9. The composition as claimed in any of claims 1 to 8, wherein the fixating agent is soil, clay, a mixture of clay and soil, phosphatic clays, concrete, Portland cement, asphalt, incinerator flue dust or cement kiln dust.

10. A process for reducing or preventing the formation of contaminants in drainage from waste rock or tailings comprising contacting the waste rock or tailings with an organic or inorganic sulfur compound in combination with a neutralizing agent, a fixating agent or a neutralizing agent and a fixating agent wherein the amount of sulfur compound in combination with the amount of neutralizing agent, fixating agent or neutralizing agent and fixating agent is sufficient to reduce or prevent the formation of contaminants in drainage from waste rock or tailings.

11. The process as claimed in claim 10, wherein the amount of sulfur compound is 0.5% by weight to 20% by weight and the amount of neutralizing agent, fixating agent or neutralizing agent and fixating agent is 1% by weight to 50% by weight, based on the weight of the waste rock or tailings.

12. The process as claimed in claim 11, wherein the amount of sulfur compound is 1% by weight to 5% by weight and the amount of neutralizing agent, fixating agent or neutralizing agent and fixating agent is 1% by weight to 15% by weight, based on the weight of the waste rock or tailings.

13. The process as claimed in any one of claims 10 to 12, wherein the sulfur compound and neutralizing agent, fixating agent or neutralizing agent and fixating agent are pre-mixed prior to contacting the waste rock or tailings.

14. The process as claimed in any one of claims 10 to 12, wherein the sulfur compound and neutralizing agent, fixating agent or neutralizing agent and fixating agent are applied separately to the waste rock or tailings.

15. The process as claimed in claim 13, wherein a composition according to any one of claims 2 to 9 is used.

## Patentansprüche

1. Zusammensetzung zum Verringern oder Verhindern der Bildung von Verunreinigungen im Ablauf von Steinabfall oder Aufbereitungsbergen, die im wesentlichen aus einer organischen oder anorganischen Schwefelverbindung in Kombination mit einem Neutralisationsmittel, einem Fixiermittel oder einem Gemisch des Neutralisationsmittels und des Fixiermittels besteht, wobei die Schwefelverbindung und das Fixiermittel, das Neutralisationsmittel oder das Gemisch des Neutralisationsmittels und des Fixiermittels in der Zusammensetzung in einer Menge vorhanden sind, die wirksam ist, um die Bildung von Metall- und Säureverunreinigung im Ablauf von festem Steinabfall oder Aufbereitungsbergen zu verringern oder zu verhindern, mit der Maßgabe, daß die toxisches Schwermetall enthaltenden Schwefelverbindungen und ihre Oxide als organische oder anorganische Schwefelverbindung ausgenommen sind.

2. Zusammensetzung nach Anspruch 1, wobei die organische oder anorganische Schwefelverbindung eine Schwefelverbindung mit einer Sulfhydrylgruppe oder einer ionisierten Sulfhydrylgruppe oder eine Schwefelverbindung ist, die eine Sulfhydrylgruppe oder eine ionisierte Sulfhydrylgruppe erzeugen kann.

3. Zusammensetzung nach einem der Ansprüche 1 und 2, wobei die organische oder anorganische Schwefelverbindung 10 bis 60 Gew.-% der Zusammensetzung ausmacht.

4. Zusammensetzung nach Anspruch 3, wobei die organische oder anorganische Schwefelverbindung 40 bis 55 Gew.-% der Zusammensetzung ausmacht.

5. Zusammensetzung nach einem der Ansprüche 1 bis 4, wobei die organische Schwefelverbindung Natriumethylxanthat, Kaliumethylxanthat, Calciumethylxanthat, Natriumglucosexanthat, Kaliumglucosexanthat, Calciumglucosexanthat, Natriumisopropylxanthat, Calciumisopropylxanthat, Kaliumisopropylxanthat, Calciumdimethyldithiocarbamate, Natriumdimethyldithiocarbamat, Kaliumdimethyldithiocarbamat, Natriumdiethyldithiocarbamat, Calciumdiethyldithiocarbamat, Kaliumdiethyldithiocarbamat, Cystein, Cystin oder Glutathion ist.

6. Zusammensetzung nach Anspruch 5, wobei die organische Schwefelverbindung Natriumdimethyldithiocarbamat oder Natriumglucosexanthat ist.

7. Zusammensetzung nach einem der Ansprüche 1 bis 4, wobei die anorganische Schwefelverbindung Natriumtrithiocarbonat, Kaliumtrithiocarbonat, Calciumtrithiocarbonat, Natriumsulfid, Kaliumsulfid oder Calciumsulfid ist.

8. Zusammensetzung nach einem der Ansprüche 1 bis 7, wobei das Neutralisationsmittel Kalkstein, gebrannter Kalk, gelöschter Kalk, Magnesiumoxid, Magnesiumhydroxid, Natriumhydroxid, Kaliumhydroxid oder Kalkofenstaub ist.

9. Zusammensetzung nach einem der Ansprüche 1 bis 8, wobei das Fixiermittel Erde, Tonerde, ein Gemisch aus Tonerde und Erde, phosphatische Tonerde(n), Beton, Portland-Zement, Asphalt, Abgasstaub einer Verbrennungsanlage oder Zementofenstaub ist.

10. Verfahren zum Verringern oder Verhindern der Bildung von Verunreinigungen im Ablauf von Steinabfall oder Aufbereitungsbergen, umfassend das Inkontaktbringen des Steinabfalls oder der Aufbereitungsberge mit einer organischen oder anorganischen Schwefelverbindung in Kombination mit einem Neutralisationsmittel, einem Fixiermittel oder einem Neutralisationsmittel und einem Fixiermittel, wobei die Menge der Schwefelverbindung in Kombination mit der Menge des Neutralisationsmittels, des Fixiermittels oder des Neutralisationsmittels und des Fixiermittels ausreicht, um die Bildung von Verunreinigungen im Ablauf von Steinabfall oder Aufbereitungsbergen zu verringern oder zu verhindern.

11. Verfahren nach Anspruch 10, wobei die Menge der Schwefelverbindung 0,5 bis 20 Gew.-% und die Menge des Neutralisationsmittels, des Fixiermittels oder des Neutralisationsmittels und des Fixiermittels 1 bis 50 Gew.-%, bezogen auf das Gewicht des Steinabfalls oder der Aufbereitungsberge beträgt.

12. Verfahren nach Anspruch 11, wobei die Menge der Schwefelverbindung 1 bis 5 Gew.-% und die Menge des Neutralisationsmittels, des Fixiermittels oder des Neutralisationsmittels und des Fixiermittels 1 bis 15 Gew.-%, bezogen auf das Gewicht des Steinabfalls oder der Aufbereitungsberge beträgt.

13. Verfahren nach einem der Ansprüche 10 bis 12, wobei die Schwefelverbindung und das Neutralisationsmittel, das Fixiermittel oder das Neutralisationsmittel und das Fixiermittel vorausgehend vor dem Inkontaktbringen mit dem Steinabfall oder den Aufbereitungsbergen gemischt werden.

14. Verfahren nach einem der Ansprüche 10 bis 12, wobei die Schwefelverbindung und das Neutralisationsmittel, das Fixiermittel oder das Neutralisationsmittel und das Fixiermittel getrennt auf den Steinabfall oder die Aufbereitungsberge aufgetragen werden.

15. Verfahren nach Anspruch 13, wobei eine Zusammensetzung nach einem der Ansprüche 2 bis 9 verwendet wird.

## Revendications

1. Composition pour réduire ou prévenir la formation de substances contaminantes dans le drainage provenant de queues ou de roches résiduaires, essentiellement constituée d'un composé de soufre organique ou inorganique en combinaison à un agent de neutralisation, un agent de fixation, ou un mélange d'un agent de neutralisation et d'un agent de fixation, le composé de soufre et l'agent de fixation, l'agent de neutralisation ou le mélange d'agent de neutralisation et d'agent de fixation, étant présent dans la composition en une quantité efficace pour réduire ou prévenir la formation de substances contaminantes à base de métaux et d'acides dans le drainage provenant desdites queues ou roches résiduaires solides, avec la condition que les composés du soufre contenant des métaux lourds toxiques et leurs oxydes soient exclus, en tant que composé de soufre organique ou inorganique.

2. Composition suivant la revendication 1, caractérisée en ce que le composé de soufre organique ou inorganique est un composé de soufre possédant un radical sulfhydryle, ou un radical sulfhydryle ionisé, ou un composé de soufre qui est capable de produire un radical sulfhydryle ou un radical sulfhydryle ionisé.

3. Composition suivant l'une quelconque des revendications 1 et 2, caractérisé en ce que le composé de soufre organique ou inorganique représente de 10% à 60% en poids de la composition.

4. Composition suivant la revendication 3, caractérisée en ce que le composé de soufre organique ou inorganique représente de 40% à 55% en poids de la composition.

5. Composition suivant l'une quelconque des revendications 1 à 4, caractérisée en ce que le composé de soufre organique est l'éthylxanthate de sodium, l'éthylxanthate de potassium, l'éthylxanthate de calcium, le glucosexanthate de sodium, le glucosexanthate de potassium, le glucosexanthate de calcium, l'isopropylxanthate de sodium, l'isopropylxanthate de calcium, l'isopropylxanthate de potassium, le diméthyldithiocarbamate de calcium, le diméthyldithiocarbamate de sodium, le diméthyldithiocarbamate de potassium, le diéthyldithiocarbamate de sodium, le diéthyldithiocarbamate de calcium, le diéthyldithiocarbamate de potassium, la cystéine, la cystine ou le glutathion.

6. Composition suivant la revendication 5, caractérisée en ce que le composé de soufre organique est le diméthyldithiocarbamate de sodium ou le glucosexanthate de sodium.

7. Composition suivant l'une quelconque des revendications 1 à 4, caractérisée en ce que le composé de soufre inorganique est le trithiocarbonate de sodium, le trithiocarbonate de potassium, le trithiocarbonate de calcium, le sulfure de sodium, le sulfure de potassium, ou le sulfure de calcium.

8. Composition suivant l'une quelconque des revendications 1 à 7, caractérisée en ce que l'agent de neutralisation est la pierre calcaire, la chaux vive, la chaux hydratée, l'oxyde de magnésium, l'hydroxyde de magnésium, l'hydroxyde de sodium, l'hydroxyde de potassium ou la poussière de four à chaud.

9. Composition suivant l'une quelconque des revendications 1 à 8, caractérisée en ce que l'agent de fixation est de la terre, de l'argile, un mélange d'argile et de terre, des argiles phosphatiques, du béton, du ciment Portland, de l'asphalte, de la poussière de cheminée d'incinérateur ou de la poussière de four à ciment.

10. Procédé pour réduire ou prévenir la formation de substances contaminantes dans le drainage de queues ou de roches résiduaires, conformément auquel on met les queues ou les roches résiduaires en contact avec un composé de soufre organique ou inorganique, en combinaison avec un agent de neutralisation, un agent de fixation ou un agent de neutralisation et un agent de fixation, où la quantité de composé de soufre en combinaison avec la quantité d'agent de neutralisation, d'agent de fixation ou d'agent de neutralisation et d'agent de fixation suffit à réduire ou à prévenir la formation de substances contaminantes dans le drainage de queues ou de roches résiduaires.

11. Procédé suivant la revendication 10, caractérisé en ce que la quantité de composé de soufre varie de 0,5% en poids à 20% en poids et la quantité d'agent de neutralisation, d'agent de fixation ou d'agent de neutralisation et d'agent de fixation est de 1% en poids à 50% en poids, sur base du poids des queues ou des roches résiduaires.

12. Procédé suivant la revendication 11, caractérisé en ce que la quantité de composé de soufre varie de 1% en poids à 5% en poids et la quantité d'agent de neutralisation, d'agent de fixation ou d'agent de neutralisation et d'agent de fixation varie de 1% en poids à 15% en poids, sur base du poids des queues ou des roches résiduaires.

13. Procédé suivant l'une quelconque des revendications 10 à 12, caractérisé en ce que le composé de soufre et l'agent de neutralisation, l'agent de fixation ou l'agent de neutralisation et l'agent de fixation sont mélangés au préalable avant la mise en contact avec les queues ou les roches résiduaires.

14. Procédé suivant l'une quelconque des revendications 10 à 12, caractérisé en ce que le composé de soufre et l'agent de neutralisation, l'agent de fixation ou l'agent de neutralisation et l'agent de fixation sont appliqués séparément aux queues ou roches résiduaires.

15. Procédé suivant la revendication 13, caractérisé en ce que l'on utilise une composition suivant l'une quelconque des revendications 2 à 9.
